# EUROPEAN PATENT SPECIFICATION

(11) **EP 1 930 159 B1**
(45) Date of publication and mention of the grant of the patent: **08.09.2010**
(21) Application number: 07079507.5
(22) Date of filing: 02.11.2007
(51) Int. Cl.: B32B 38/18, F01D 25/06

(54) **A method of applying a constrained layer damping material**
Verfahren zum Auftragen eines Dämpfermaterials mit eingeschlossener Schicht
Procédé pour l'application d'un matériau amortisseur de couche contrainte

(30) Priority: 05.12.2006 GB 0624251
(43) Date of publication of application: 11.06.2008
(73) Proprietor: Rolls-Royce plc, 65 Buckingham Gate London SW1E 6AT (GB)
(72) Inventor: Ashley, Duncan Edward, Greenbank, Bristol BS5 6HL (GB)
(74) Representative: Tindall, Adam

(56) References cited:
- JOURNAL OF COMPOSITE MATERIALS, [Online] vol. 32, no. 21/1998, 1998, XP002472287 Retrieved from the Internet: URL:http://casl.ucsd.edu/papers/paper_jcm. PDF> [retrieved on 2008-03-11]
- CD JOHNSON COMPOSITE STRUCTURES, [Online] 1998, pages 115-125, XP002472288 Retrieved from the Internet: URL:http://casl.ucsd.edu/papers/paper_tors ion_shafts.PDF> [retrieved on 2008-03-11]

## Description

This invention relates to a method of applying a constrained layer damping material to a component, and is particularly, although not exclusively, concerned with the application of a constrained layer damping material to a component of a gas turbine engine, such as an aerofoil component of a gas turbine compressor.

A gas turbine compressor comprises rotating blades and stationary vanes which may be slender components which are cantilevered at one or both ends. Such components are susceptible to forced vibrations, usually excited by the gas flow through the compressor. Such forced vibrations are typically likely to arise when the engine is running at the extremes of its operating envelope.

It is known to apply a constrained layer damping system to such components. A constrained layer damping system comprises a damping material sandwiched between the surface of the component and a constraining layer. The damping material may be bonded by means of a separate adhesive to the component and to the constraining layer, but in the aerospace industry it is common for the damping material itself to be an adhesive, so that the damping material forms an adhesive bond between the component and the constraining layer. For example, the damping material may comprise an acrylic polymer based visco-elastic damping adhesive. The constrained layer damping system may be supplied as a sheet or web material comprising the constraining layer with the damping adhesive applied, a peelable release film extending over the surface of the damping adhesive away from the constraining layer. Such material is commonly referred to as "damping foil".

In a known technique for applying a constrained layer damping (CLD) system, a piece of the material is cut to shape, and then the release film is removed and the material is applied to the component to be damped, with the damping adhesive in contact with the surface of the component. The material can be applied by hand or by machine, and pressure may be applied by rollers in order to bond the material securely to the component. The application process may take place at elevated temperature, in order to enhance bonding.

With known techniques, it is difficult to achieve consistency in the application of the CLD material, particularly when the material is applied to components having a complex geometry, such as compressor vanes. When the material is applied to component surfaces having a complex or variable curvature, residual peel stresses arise in the CLD material which can cause local de-bonding from the component. This can cause an incorrect aerodynamic profile on the component surface, degrading engine performance and handling characteristics. If a local de-bond propagates, partial or wholesale loss of the CLD material can arise, leaving the component inadequately damped.

According to the present invention there is provided a method of applying a constrained layer damping material to a component, the constrained layer damping material comprising a constraining layer and an adhesive, the method comprising:
(i) placing the constrained layer damping material on the component with the adhesive between the component and the constraining layer; and
(ii) applying pressure to the constraining layer, **characterised in that**
the pressure is applied over substantially the entire area of the constraining layer such that the constraining layer is pressed into contact with the component as the adhesive cures and bonds the constraining layer to the component.

Preferably the pressure is not less than 30kPa and is applied for a time which is not less than 5 minutes and not more than 8 hours, the adhesive being maintained at a temperature of not less than 80°C and not more than 180°C for at least part of the duration of the application of pressure.

The adhesive may be a damping adhesive.

The adhesive may comprise an acrylic polymer.

The pressure applied to the constraining layer may be not greater than 1000 kPa and, in a particular method in accordance with the present invention lies in the range 600 to 800 kPa, more particularly 680 to 700 kPa.

The pressure may be applied for a time which is not less than 1 hour and not more than 2 hours. The damping adhesive may be maintained at a temperature not more than 120°C.

The constraining layer may comprise any material having a stiffness great enough to constrain the damping adhesive and/or a layer of damping material in order to cause the constrained layer damping material to provide sufficient damping. The constraining layer may, for example, be made from stainless steel, aluminium or aluminium alloy, a thermoplastic material or a glass or carbon fibre composite.

The method may be carried out by placing the component, with the constrained layer damping material in position on the component, in a chamber which is maintained at the required temperature and pressure, for the required time. Before the component is placed in the chamber, a liner may be applied over the constraining layer. The liner may be in the form of a bag of flexible material which accommodates the entire component, and the bag may be evacuated before pressure is applied to the constraining layer in order to bring the material of the bag into close contact with the constraining layer.

In an alternative method, the pressure may be applied by means of a press member having a press surface which conforms to the surface profile of the constrained layer damping material after application. The press member may have a resilient lining defining the press surface. The press member may have heating means for heating the damping adhesive during the application of pressure.

For a better understanding of the present invention, and to show more clearly how it may be carried into effect, reference will now be made, by way of example, to the accompanying drawings, in which:-
Figure 1 is a diagrammatic view of a compressor stage of a gas turbine engine;
Figure 2 shows a vane of the compressor stage of Figure 1;
Figure 3 is a sectional view taken on the line III-III in Figure 2;
Figure 4 is an enlarged view of the region IV in Figure 3;
Figure 5 is a diagrammatic view of a pressure chamber for use in the application of a constrained layer damping material to the vane of Figure 2; and
Figure 6 shows a press suitable for use in an alternative method of applying the constrained layer damping material to the vane.

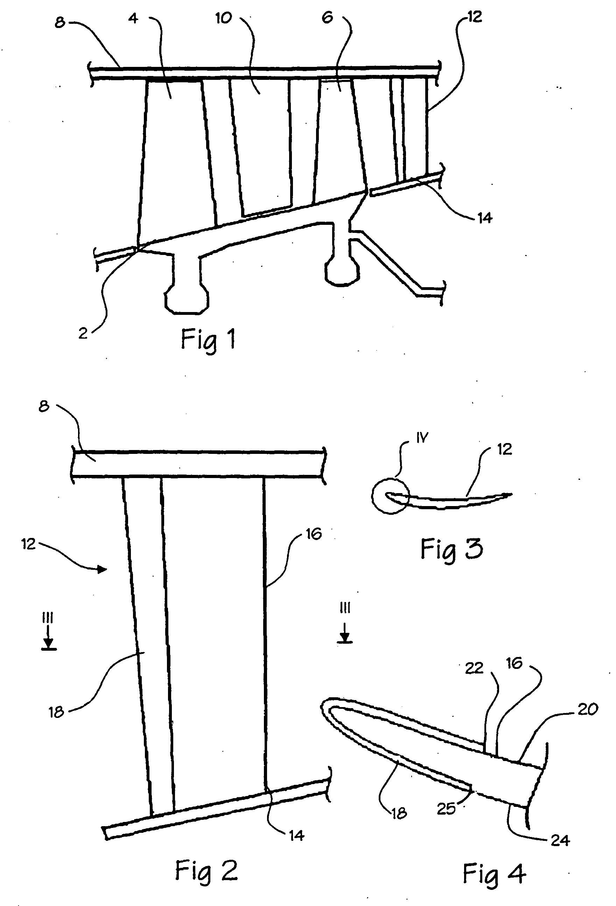

Figure 1 shows a rotor 2 carrying compressor blades 4 and 6. The blades 4 and 6 rotate within a casing 8, and a row of stator vanes 10 is disposed between the blades 4 and 6. Each vane 10 is cantilevered at its outer end from the casing 8. A further row of stator vanes 12 is situated downstream of the blades 4 and 6, with respect to the direction A of gas flow through the compressor. Each vane 12 extends between the casing 8 and an inner casing 14, and is cantilevered at both ends. The blades 4 and 6 and the vanes 10 and 12 may be made from any suitable material, including aerospace alloys and composite materials, in particular carbon reinforced composite materials.

One of the vanes 12 is shown on a larger scale in Figure 2. The vane comprises a body 16 having an aerodynamic profile, to which is applied a constrained layer damping system comprising a constrained layer damping material 18 in the form of damping foil.

As shown in Figure 4, the damping foil is in the form of a layer which extends around the leading edge of the vane 12, and extends for some distance from the leading edge down the pressure and suction sides 20, 24 of the vane 12. The surface of the body 16 may be continuous, as indicated in Figure 4 for the pressure side 20, so that the outer surface of the damping foil 18 stands proud of the surface of the body 16 at its edge 22. Alternatively, as indicated for the suction side 24 in Figure 4, the body 16 may be recessed so that the outer surface of the damping foil 18 is flush with the surface of the vane 16 at its edge 25.

Although not shown in Figures 1 to 4, the damping foil 18 comprises a constraining layer, which forms the outer surface of the damping foil 18 when applied to the component 16, and a damping adhesive, which may be an acrylic polymer, which, when applied to the component 16 is sandwiched between the constraining layer and the surface of the component 16. The damping adhesive thus serves the dual purpose of providing a visco-elastic damping effect, and of bonding the constraining layer to the component 16.

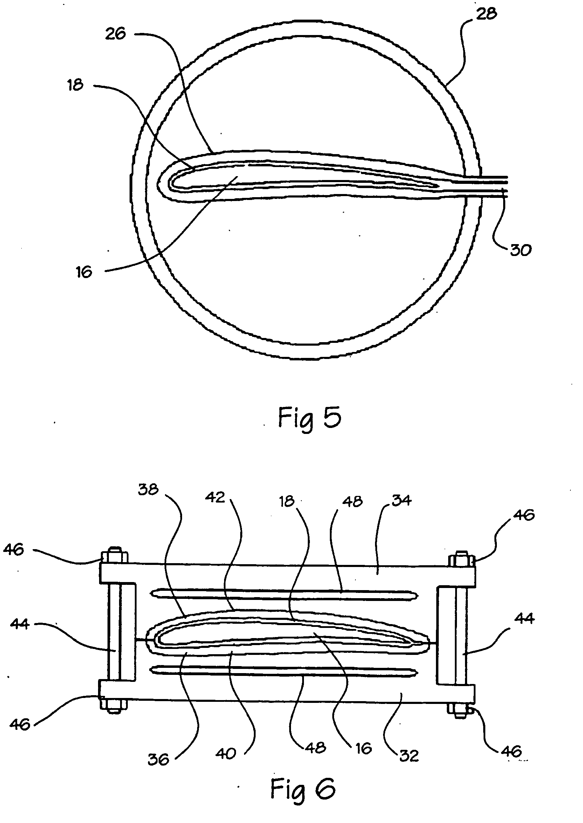

One method of applying the damping foil 18 to the body 16 of the vane 12 is illustrated in Figure 5. The damping foil 18 is supplied as a pre-formed composite consisting of the constraining layer with the damping adhesive applied over the full extent of one surface. The surface of the damping adhesive away from the constraining layer is provided with a release film. A piece of the damping foil 18 is cut accurately to size from a sheet or web of the material as supplied, and preformed approximately to the required shape. The body 16 of the vane 12 is cleaned and any necessary surface treatments, such as grit blasting or etching are carried out. The backing layer or release film is then peeled from the cut and formed piece of damping foil 18, which is then applied to the body 16. The entire vane, with the damping foil 18 applied, is then sealed within a vacuum bag 26 and placed in an autoclave 28. The vacuum bag is connected by a tube 30 to the exterior of the autoclave 28, and the bag 26 is then evacuated by means of a vacuum pump connected to the tube 30 to bring the bag into intimate contact with the exterior of the damping foil 18. The autoclave 28 is then pressurised, and the temperature within it is raised to a predetermined pressure and temperature, and the curing of the damping adhesive is allowed to proceed for a predetermined time. At the end of the curing process, the component is allowed to cool and is removed from the autoclave 28 and the vacuum bag 26.

It will be appreciated that the process described above results in the elevated pressure being applied over the full extent of the surface of the damping foil 18, in contrast to the known process in which local pressure is applied intermittently by way of rollers. Furthermore, because the process is conducted within the autoclave 28, the temperature can be maintained at a controlled level throughout the curing process. Consequently, an improved and consistent bond between the damping foil 18 and the body 16 can be achieved.

Figure 6 illustrates a press for use in an alternative method of applying the damping foil 18 to the body 16. In the method as carried out in the press of Figure 6, the cutting to shape and forming of the damping foil 18, and the cleaning of the body 16, are carried out as before. However, the vacuum bag 26 is not used, and instead the component is placed between two press members 32, 34 made from a substantially rigid material such as tool steel, aluminium or hard plastics material. The press members 32, 34 have press surfaces 36, 38 having shapes which are complementary to that of the finished vane 12. The press surfaces 36, 38 are provided on respective resilient liners 40, 42 which are made, for example, from silicone rubber.

The body 16, with the damping foil 18 applied, is placed between the press members 32, 34, which are then drawn together by means of tie bars 44 and nuts 46 to apply pressure to the damping foil 18. The resilient liners 40, 42 serve to even out the pressure applied by the press members 32, 34, so as to apply a consistent pressure over the full extent of the surface of the damping foil 18.

Heater elements 48 are incorporated into the press members 32, 34, so that the entire press, and the body 16 and the damping foil 18, can be raised to the temperature required for curing of the damping adhesive. Alternatively, external heating means could be provided, for example by placing the assembled press in an oven. Suitable means, such as thermocouples, may be provided within the press members 32, 34 to monitor the cure temperature.

It will be appreciated that, for purposes of illustration, the damping foil 18 is shown as extending over the entire surface of the body 16 in Figures 5 and 6, whereas in Figures 2 and 4 the damping foil 18 is provided only at the leading edge region of the vane 12.

In a specific process in accordance with the present invention, a damping foil 18 is used which comprises a constraining layer of stainless steel having a thickness of 0.05 mm. The damping adhesive comprises a visco-elastic polymer available under the designation HIP2 from Heathcote Industrial Plastics Limited of Newcastle-under-Lyme, Staffordshire, UK. The damping foil is applied to a compressor vane made from carbon reinforced composite material. After application of the damping foil 18 comprising the constraining layer and the damping adhesive, the component was subjected to a pressure in the range 680 kPa to 700 kPa, specifically 690 kPa, over the entire surface of the constraining layer at a temperature of in the range 90°C to 110°C, specifically 100°C, for a duration in the range 80 to 100 minutes, specifically 90 minutes.

Cutting out of the pieces of the damping foil 18 may be performed using templates, stamping machines or CNC machines, in order to provide pieces of consistent shape. Although, as described above, a single piece of the damping foil 18 could be used for each component, it is also possible for each component to be provided with a plurality of pieces of the damping foil 18, in order to allow the material to conform better to complex geometry.

As described above, the damping adhesive serves both to damp vibrations excited in the component and to bond the damping foil 18 to the component. In some circumstances, it may be desirable for a "tackifier" film to be applied to the surface of the component 16 after any surface preparation processes and before application of the damping foil 18, in order to improve the strength of the bond between the damping foil 18 and the component 16. Improved initial bonding can also be achieved by preheating the component before application of the damping foil 18. In some circumstances, the damping adhesive may be excessively tacky in ambient conditions, causing difficulties positioning and seating the damping foil 18 on the component without sticking prematurely. To avoid this, it may be desirable for the damping foil 18 to be pre-chilled before application to the component.

In the embodiments of Figures 5 and 6, it may be desirable to place one or more peel plies of a suitable film between the vacuum bag 26 (or the linings 40, 42) and the damping foil 18 in order to prevent unwanted adhesion when removing the components with the cured damping adhesive from the vacuum bag 26 or the press members 32, 34.

The constraining layer may be formed so as to serve as a relatively stiff erosion shield.

## Claims

1. A method of applying a constrained layer damping material (18) to a component (16), the constrained layer damping material (18) comprising a constraining layer and an adhesive, the method comprising:
(i) placing the constrained layer damping material (18) on the component (16) with the adhesive between the component and the constraining layer; and
(ii) applying pressure to the constraining layer, **characterised in that** the pressure is applied over substantially the entire area of the constraining layer such that the constraining layer is pressed into contact with the component (16) as the adhesive cures and bonds the constraining layer to the component.

2. A method as claimed in claim 1 wherein the pressure is not less than 30kPa, and is applied for a time which is not less than 5 minutes and not more than 8 hours, the adhesive being maintained at a temperature of not less than 80°C and not more than 180°C for at least part of the duration of the application of pressure.

3. A method as claimed in claim 1 or claim 2, **characterised in that** the adhesive is a damping adhesive.

4. A method as claimed in claim 1, claim 2 or claim 3, **characterised in that** the adhesive comprises an acrylic polymer.

5. A method as claimed in any one of the preceding claims, **characterised in that** the pressure applied to the constraining layer is not greater than 1000 kPa.

6. A method as claimed in claim 5, **characterised in that** the pressure applied to the constraining layer is not less than 600 kPa and not more than 800 kPa.

7. A method as claimed in any one of the preceding claims, in which the duration of the application of pressure is not less than 1 hour and not more than 2 hours.

8. A method as claimed in any one of the preceding claims, **characterised in that** the adhesive is maintained during application of pressure at a temperature not greater than 120°C.

9. A method as claimed in any one of the preceding claims, **characterised in that** the constraining layer comprises stainless steel, aluminium, aluminium alloy, thermoplastic material, or glass or carbon fibre composite material.

10. A method as claimed in any one of the preceding claims, in which the step of applying pressure to the constraining layer is performed in a chamber (28), the interior of which is maintained at a predetermined temperature and pressure.

11. A method as claimed in claim 10, **characterised in that,** after the constrained layer damping material (18) is placed on the component (16), the component (16) is placed within a bag (26) before the component (16) and the bag (26) are placed in the chamber (28), the bag (26) being evacuated prior to the application of pressure to the constraining layer.

12. A method as claimed in any one of claims 1 to 9, **characterised in that** the pressure is applied to the constraining layer by a press member (32, 34) having a press surface conforming to the surface profile of the constrained layer damping material (18) after application to the component (16).

13. A method as claimed in claim 12, **characterised in that** the press member (32, 34) has a resilient lining (40, 42) defining the press surface.

14. A method as claimed in claim 12 or 13, **characterised in that** the press member (32, 34) is provided with heating means (48).

15. A method as claimed in any one of the preceding claims, **characterised in that** the constraining layer comprises stainless steel having a thickness of 0.05 mm, the component (16) is a moulded carbon fibre composite component, and the adhesive comprises an acrylic polymer, the pressure applied to the constraining layer being not less 680 kPa and not more than 700 kPa, the duration of the application of pressure being not less than 80 minutes and not more than 100 minutes, and the adhesive being maintained at a temperature of not less 90°C and not more than 110°C for the duration of the application of pressure.

16. A method as claimed in any one of the preceding claims, **characterised in that** the component (16) is an aerofoil component of a gas turbine engine.

17. A method as claimed in claim 15, **characterised in that** the component is a compressor vane.

## Patentansprüche

1. Verfahren zum Aufbringen von Dämpfungsmaterial (18) als eingeschlossene Schicht auf ein Bauteil (16), wobei das Dämpfungsmaterial (18) als eingeschlossene Schicht eine einschließende Schicht und einen Klebstoff aufweist, wobei das Verfahren umfasst:
(i) Platzieren des Dämpfungsmaterials (18) als eingeschlossene Schicht auf dem Bauteil (16) mit dem Klebstoff zwischen dem Bauteil und der einschließenden Schicht, und
(ii) Anlegen eines Drucks auf die einschließende Schicht, **dadurch gekennzeichnet, daß** der Druck über im wesentlichen die gesamte Fläche der einschließenden Schicht angelegt wird, so daß die einschließende Schicht in Anlage mit dem Bauteil (16) gepresst wird, während der Klebstoff abbindet und die einschließende Schicht mit dem Bauteil verbindet.

2. Verfahren nach Anspruch 1, wobei der Druck nicht weniger als 30 kPa beträgt und während einer Zeitdauer angelegt wird, die nicht weniger als 5 Minuten und nicht mehr als 8 Stunden beträgt, wobei der Klebstoff auf einer Temperatur von nicht weniger als 80°C und nicht mehr als 180°C während mindestens eines Teils der Dauer des Anlegens des Drucks gehalten wird.

3. Verfahren nach Anspruch 1 oder Anspruch 2, **dadurch gekennzeichnet, daß** der Klebstoff ein dämpfender Klebstoff ist.

4. Verfahren nach Anspruch 1, Anspruch 2 oder Anspruch 3, **dadurch gekennzeichnet, daß** der Klebstoff einen Acrylpolymer umfasst.

5. Verfahren nach irgendeinem der vorgehenden Ansprüche, **dadurch gekennzeichnet, daß** der auf die einschließende Schicht ausgeübte Druck nicht größer als 1000 kPa ist.

6. Verfahren nach Anspruch 5, **dadurch gekennzeichnet, daß** der auf die einschließende Schicht ausgeübte Druck nicht weniger als 600 kPa und nicht mehr als 800 kPa beträgt.

7. Verfahren nach irgendeinem der vorhergehenden Ansprüche, wobei die Dauer der Anwendung des Drucks nicht weniger als eine Stunde und nicht mehr als zwei Stunden beträgt.

8. Verfahren nach irgendeinem der vorhergehenden Ansprüche, **dadurch gekennzeichnet, daß** der Klebstoff während der Anwendung des Drucks auf einer Temperatur von nicht mehr als 120°C gehalten wird.

9. Verfahren nach irgendeinem der vorhergehenden Ansprüche, **dadurch gekennzeichnet, daß** die einschließende Schicht rostfreien Stahl, Aluminium, eine Aluminiumlegierung, thermoplastisches Material, oder Glas- oder Kohlenfaser-Kompositmaterial umfasst.

10. Verfahren nach irgendeinem der vorhergehenden Ansprüche, wobei der Schritt des Anlegens von Druck auf die einschließende Schicht in einer Kammer (28) durchgeführt wird, deren Inneres auf einer vorgegebenen Temperatur und einem vorgegebenen Druck gehalten wird.

11. Verfahren nach Anspruch 10, **dadurch gekennzeichnet, daß,** nachdem das Dämpfungsmaterial (18) als eingeschlossene Schicht auf dem Bauteil (16) platziert worden ist, das Bauteil (16) in einem Beutel (26) platziert wird, bevor das Bauteil (16) und der Beutel (26) in die Kammer (28) eingebracht werden, und der Beutel (26) vor dem Anlegen von Druck an die einschließende Schicht evakuiert wird.

12. Verfahren nach irgendeinem der Ansprüche 1 bis 9, **dadurch gekennzeichnet, daß** der Druck auf die einschließende Schicht durch einen Druckkörper (32, 34) ausgeübt wird, der eine Druckfläche aufweist, die dem Oberflächenprofil des Dämpfungsmaterials (18) als eingeschlossene Schicht nach dem Aufbringen auf das Bauteil (16) entspricht.

13. Verfahren nach Anspruch 12, **dadurch gekennzeichnet, daß** der Druckkörper (32, 34) eine die Druckfläche bildende elastische Verkleidung (40, 42) aufweist.

14. Verfahren nach Anspruch 12 oder 13, **dadurch gekennzeichnet, daß** der Druckkörper (32, 34) mit Heizmitteln (48) versehen ist.

15. Verfahren nach irgendeinem der vorhergehenden Ansprüche, **dadurch gekennzeichnet, daß** die einschließende Schicht rostfreien Stahl mit einer Dicke von 0,05 Millimeter umfasst, das Bauteil (16) eine geformte Kohlenfaser-Kompositkomponente ist, und der Klebstoff einen Acrylpolymer umfasst, der auf die einschließende Schicht ausgeübte Druck nicht weniger als 680 kPa und nicht mehr als 700 kPa beträgt, die Dauer der Anwendung des Drucks nicht weniger als 80 Minuten und nicht mehr als 100 Minuten beträgt, und der Klebstoff auf einer Temperatur von nicht weniger als 90°C und nicht mehr als 110°C während der Dauer der Anwendung des Drucks gehalten wird.

16. Verfahren nach irgendeinem der vorhergehenden Ansprüche, **dadurch gekennzeichnet, daß** das Bauteil (16) eine Flügelkomponente eines Gasturbinentriebwerks ist.

17. Verfahren nach Anspruch 15, **dadurch gekennzeichnet, daß** das Bauteil eine Verdichterschaufel ist.

## Revendications

1. Procédé d'application d'un matériau amortisseur de couche contrainte (18) à un composant (16), le matériau amortisseur de couche contrainte (18) comprenant une couche de contrainte et un adhésif, le procédé comprenant les étapes consistant à :
(i) mettre en place le matériau amortisseur de couche contrainte (18) sur le composant (16) avec l'adhésif entre le composant et la couche de contrainte ; et
(ii) appliquer une pression à la couche de contrainte, **caractérisé en ce que** la pression est appliquée sensiblement sur l'ensemble de la zone de la couche de contrainte de telle sorte que la couche de contrainte soit pressée en contact avec le composant (16) lorsque l'adhésif durcit et lie la couche de contrainte au composant.

2. Procédé selon la revendication 1, dans lequel la pression n'est pas inférieure à 30 kPa, et est appliquée pendant une durée qui n'est pas inférieure à 5 minutes et pas supérieure à 8 heures, l'adhésif étant maintenu à une température qui n'est pas inférieure à 80°C et pas supérieure à 180°C pendant au moins une partie de la durée de l'application de pression.

3. Procédé selon la revendication 1 ou la revendication 2, **caractérisé en ce que** l'adhésif est un adhésif amortisseur.

4. Procédé selon la revendication 1, la revendication 2 ou la revendication 3, **caractérisé en ce que** l'adhésif comprend un polymère acrylique.

5. Procédé selon l'une quelconque des revendications précédentes, **caractérisé en ce que** la pression appliquée à la couche de contrainte n'est pas supérieure à 1000 kPa.

6. Procédé selon la revendication 5, **caractérisé en ce que** la pression appliquée à la couche de contrainte n'est pas inférieure à 600 kPa et pas supérieure à 800 kPa.

7. Procédé selon l'une quelconque des revendications précédentes, dans lequel la durée de l'application de pression n'est pas inférieure à 1 heure et pas supérieure à 2 heures.

8. Procédé selon l'une quelconque des revendications précédentes, **caractérisé en ce que** l'adhésif est maintenu pendant l'application de pression à une température pas supérieure à 120°C.

9. Procédé selon l'une quelconque des revendications précédentes, **caractérisé en ce que** la couche de contrainte comprend acier inoxydable, aluminium, alliage d'aluminium, matériau thermoplastique, ou matériau composite en fibre de verre ou de carbone.

10. Procédé selon l'une quelconque des revendications précédentes, dans lequel l'étape d'application de pression sur la couche de contrainte est effectuée dans une chambre (28), dont l'intérieur est maintenu à une température et à une pression prédéterminées.

11. Procédé selon la revendication 10, **caractérisé en ce que,** une fois que le matériau amortisseur de couche contrainte (18) est placé sur le composant (16), le composant (16) est placé à l'intérieur d'un sac (26) avant que le composant (16) et le sac (26) soient placés dans la chambre (28), le sac (26) étant mis sous vide avant l'application de pression à la couche de contrainte.

12. Procédé selon l'une quelconque des revendications 1 à 9, **caractérisé en ce que** la pression est appliquée à la couche de contrainte par un élément de pression (32, 34) ayant une surface de pression se conformant au profil de surface du matériau amortisseur de couche contrainte (18) après application au composant (16).

13. Procédé selon la revendication 12, **caractérisé en ce que** l'élément de pression (32, 34) présente un revêtement élastique (40, 42) définissant la surface de pression.

14. Procédé selon la revendication 12 ou 13, **caractérisé en ce que** l'élément de pression (32, 34) est doté de moyens de chauffage (48).

15. Procédé selon l'une quelconque des revendications précédentes, **caractérisé en ce que** la couche de contrainte comprend de l'acier inoxydable ayant une épaisseur de 0,05 mm, le composant (16) est un composant composite en fibre de carbone moulé, et l'adhésif comprend un polymère acrylique, la pression appliquée à la couche de contrainte n'étant pas inférieure à 680 kPa et pas supérieure à 700 kPa, la durée de l'application de pression n'étant pas inférieure à 80 minutes et pas supérieure à 100 minutes, et l'adhésif étant maintenu à une température pas inférieure à 90°C et pas supérieure à 110°C pendant la durée de l'application de pression.

16. Procédé selon l'une quelconque des revendications précédentes, **caractérisé en ce que** le composant (16) est un composant aérodynamique d'une turbine à gaz.

17. Procédé selon la revendication 15, **caractérisé en ce que** le composant est une aube de compresseur.
